(19) Europäisches Patentamt
European Patent Office
Office européen des brevets

(11) EP 0 572 717 B1

## (12) FASCICULE DE BREVET EUROPEEN

(45) Date de publication et mention
de la délivrance du brevet:
**10.07.1996 Bulletin 1996/28**

(51) Int. Cl.⁶: **B23H 1/02**

(21) Numéro de dépôt: **92120462.4**

(22) Date de dépôt: **01.12.1992**

(54) **Générateur d'impulsions pour usiner par électro-érosion**

Impulsgenerator zur elektroerosiven Bearbeitung

Pulse generator for electroerosion machining

(84) Etats contractants désignés:
**CH DE ES FR GB IT LI**

(30) Priorité: **30.05.1992 EP 92201544**

(43) Date de publication de la demande:
**08.12.1993 Bulletin 1993/49**

(73) Titulaire: **CHARMILLES TECHNOLOGIES S.A.**
**CH-1217 Meyrin 1 (CH)**

(72) Inventeur: **Martin, Roland**
**F-74520 Dingy-en-Vuache (FR)**

(56) Documents cités:
**CH-A- 644 290       FR-A- 2 189 936**
**US-A- 3 832 510       US-A- 4 443 682**

• **PATENT ABSTRACTS OF JAPAN vol. 10, no. 21**
**(M-449)(2078) 28 Janvier 1986 & JP-A-60 180 721**
**(FANUC K.K.) 14 September 1985**

## Description

La présente invention a trait à un générateur d'impulsions contrôlées pour l'usinage par décharges électriques intermittentes (ou électro-érosion), permettant d'émettre des impulsions avec un bon rendement énergétique, d'ajuster en continu leur niveau énergétique et de contrôler leur durée et leur fréquence.

Au lieu de limiter la puissance de la source d'alimentation en courant continu d'un générateur d'électroérosion par des résistances branchées en série avec les électrodes, il est bien connu, en particulier par les brevets CH 377 951 et CH 563 835 de la demanderesse, d'éviter une dissipation de puissance dans des résistances en appliquant toute la puissance de la source à un accumulateur d'énergie qui la restitue ensuite à la zone d'usinage. (Voir la figure 1a correspondant respectivement à la figure 6 de CH 377 951 et aux figures 1, 4, 5 et 6 de CH 563 835).

Grâce au dispositif décrit dans le brevet CH 563 835, le courant circulant dans cet accumulateur peut être maintenu à une valeur prédéterminée et cette restitution se faire selon des impulsions de durée et de fréquence contrôlée, grâce à la possibilité d'envoyer l'énergie de l'accumulateur dans un circuit de dérivation, de préférence de basse impédance. (Voir la figure 1b correspondant aux figures 1, 4, 5 et 6 de CH 563 835, dans lesquelles le courant i restitué par l'accumulateur L1 circule à travers une diode et un dispositif conjoncteur-disjoncteur ).

Dans certaines variantes des dispositifs décrits dans les brevets ci-dessus, l'accumulateur peut même restituer de l'énergie à la source d'alimentation grâce à un circuit de récupération dans lequel le courant restitué par l'accumulateur traverse la source en sens inverse du courant qu'elle peut fournir.

- Dans le cas où la zone d'usinage est branchée dans ce circuit de récupération, la décroissance du courant d'usinage est très rapide du fait de son passage en sens inverse à travers la source, car la tension de celle-ci s'oppose à celle de l'accumulateur, d'où l'appelation "puits" donnée à ce type de circuit; le courant des décharges peut être élevé et la durée de ces dernières, courte. (Voir la figure 1c correspondant à la figure 6 de CH 377 951).
- Dans le cas où la zone d'usinage n'est pas branchée dans ce circuit de récupération, la fin de l'impulsion de courant dans la zone d'usinage ne coincide plus nécessairement avec le moment où l'accumulateur a épuisé toute l'énergie emmagasinée; c'est dans l'intervalle de temps séparant deux impulsions successives que cette récupération a lieu, le courant restitué par l'accumulateur étant dérivé dans le circuit de restitution simultanément à la coupure du circuit d'usinage. (Voir la figure 1d correspondant à la figure 7 de CH 563 835).

Ces types de circuit permettent de réduire la puissance de la source d'alimentation d'un facteur supérieur à trois par rapport à celle d'un circuit avec résistance en série. Un autre de leurs avantages est de pouvoir maintenir constant en continu le niveau des impulsions de courant, même si la tension de la source varie suite à des fluctuations du réseau d'alimentation.

Pour augmenter les performances d'un générateur d'impulsions, il est connu également d'utiliser une source auxiliaire d'amorçage de faible puissance pour amorcer ses décharges et de n'enclencher la source d'alimentation proprement dite (ou source de puissance) qu'après avoir détecté l'amorçage d'une décharge. Citons le générateur à deux sources d'impulsions commandées, associées chacune à un accumulateur d'énergie et montées en parallèle à la zone d'usinage, illustré à la figure 7 du CH 563 835 ou le générateur avec source auxiliaire d'amorçage à relaxation, montée aussi en parallèle, décrit dans le brevet CH 644 290 de la demanderesse. Dans les circuits décrits dans le brevet CH 563 835 mentionné plus haut, l'amplitude du courant d'usinage est maintenue à une ou plusieurs valeurs prédéterminées. Au contraire, il peut être avantageux de contrôler, grâce au dispositif décrit dans ce brevet CH 644 290, l'amplitude du courant de chaque décharge en fonction de la durée de son amorçage, tout en maintenant sa durée à une valeur prédéterminée. Rappelons que si la variation de l'amplitude en fonction de son délai d'amorçage est automatique pour les générateurs à relaxation, seul le dispositif ci-dessus permet de la réaliser avec un générateur d'impulsions commandées.

Toutefois le rendement énergétique des générateurs d'impulsions pour électroérosion connus reste encore insuffisant, car la plus grande partie de l'énergie fournie par la source d'alimentation s'accumule par inductivité, en particulier dans la ligne d'usinage (self de ligne), surtout dans la source de puissance, et ne peut donc pas être consommée par l'usinage. Il serait très avantageux de pouvoir restituer à la source d'alimentation au moins une partie de cette énergie. Le but de la présente invention est donc de réaliser un générateur d'impulsions commandées qui allie les avantages des deux types de circuit mentionnés ci-dessus ( bon rendement énergétique, contrôle de l'amplitude du courant d'usinage, de la durée et de la fréquence des décharges) en utilisant une source auxiliaire d'amorçage et des circuits restituant l'énergie non consommée dans l'usinage, et qui soit insensible aux fluctuations du réseau d'alimentation grâce à un mode original d'alimentation dont le grand avantage est de ne nécessiter qu'une seule régulation de la tension.

Ceci a été réalisé par les générateurs selon la présente invention qui sont agencés pour récupérer l'énergie dissipée dans la self de ligne et dans lesquels une source de courant de puissance élevée peut alimenter à haute fréquences la zone d'usinage entre les électrodes avec des impulsions contrôlées de courant, courtes, de grande amplitude et à fronts raides, et dans lesquels l'énergie accumulée par inductivité dans la ligne d'usinage est restituée dans la zone d'usinage, en particulier pendant les intervalles de temps séparant deux impulsions successives émises par la source de puissance élevée; ils sont caractérisés par une source intermédiaire branchée en série avec l'électrode- outil et la pièce à usiner dans un circuit dit "de restitution" et par des moyens pour renvoyer cette énergie depuis cette source intermédiaire jusqu'à la source de puissance élevée.

Par circuit dit "de restitution", on entend un circuit agencé pour que le courant de restitution fourni par l'énergie accumulée par inductivité dans la ligne d'usinage, dite "self de ligne", traverse une source en sens inverse du courant que celle-ci peut fournir.

Il avait déjà été suggéré dans CH 644 290 de remplacer la batterie de résistances en série avec la source d'alimentation par des selfs disposées selon l'un des schémas décrits dans CH 563.835, de manière à la transformer en générateur d'impulsions commandées avec accumulateurs d'énergie. Dans le générateur qu'on obtiendrait ainsi, la zone d'usinage ne serait jamais en série avec une source dans un circuit de restitution. Dans les générateurs selon la présente invention au contraire, la zone d'usinage peut être traversée par le courant qui restitue l'énergie accumulée dans la self de ligne à une source selon un circuit "puits".

Les générateurs selon la présente invention diffèrent des circuits connus par les points suivants :

- l'énergie accumulée par inductivité dans la ligne d'usinage est restituée à une source intermédiaire (ou secondaire) et non directement à la source alimentant en énergie la zone d'usinage (source principale ou source de puissance) ou directement à une source d'allumage distincte de cette source intermédiaire;
- ils comportent un circuit élévateur de tension avec stabilisateur de tension intercalé entre ces deux sources, permettant d'emmagasiner cette énergie dans la source intermédiaire, puis de la restituer, à volonté, à la source d'alimentation principale (et éventuellement à une source d'allumage distincte de cette source intermédiaire);
- les sources alimentant la zone d'usinage (source principale et eventuellement une source d'allumage) ne sont alimentées que par la source intermédiaire et c'est celle-ci qui est raccordée au réseau d'alimentation ;
- la source principale ne comporte plus de régulateur. Un régulateur stabilisant la tension restituée est intégré à la source intermédiaire qui ne délivre que l'énergie nécessaire à cette source principale ; de plus, la limitation de sa puissance est assurée par la self de ligne.

D'autres différences entre les générateurs selon la présente invention et les générateurs connus seront exposées plus loin.

Le dessin annexé rappelle certains éléments de l'état de la technique et représente schématiquement et à titre d'exemple, plusieurs formes d'exécution du générateur selon la présente invention.

Les figures 1a à 1d illustrent divers circuits connus mentionnés dans l'introduction.

La fig. 2 schématise une première forme d'exécution d'un générateur selon la présente invention dont la source d'amorçage et la source d'alimentation de puissance élevée sont alimentées par la même source intermédiaire raccordée au réseau.

La fig. 3 montre l'allure des impulsions de tension et des impulsions de courant appliquées entre les électrodes dans la zone d'usinage du circuit selon la fig. 2.

La fig. 4 montre l'allure d' impulsions de finition.

La fig. 5 représente le circuit élévateur de tension intercalé entre la source intermédiaire du circuit de restitution et la ou les sources du circuit d'usinage.

La fig. 6 représente une autre forme d'exécution d'un générateur selon la présente invention dans lequel la source intermédiaire raccordée au réseau joue aussi le rôle de source d'amorçage.

La fig. 7 schématise une première variante du circuit "puits" illustré à la fig. 2.

La fig. 8 schématise une deuxième variante du circuit "puits" illustré à la fig. 2.

La fig. 9 schématise une troisième variante du circuit "puits" illustré à la fig. 2.

La fig. 10 schématise une autre variante du circuit avec source intermédiaire illustré à la fig. 2.

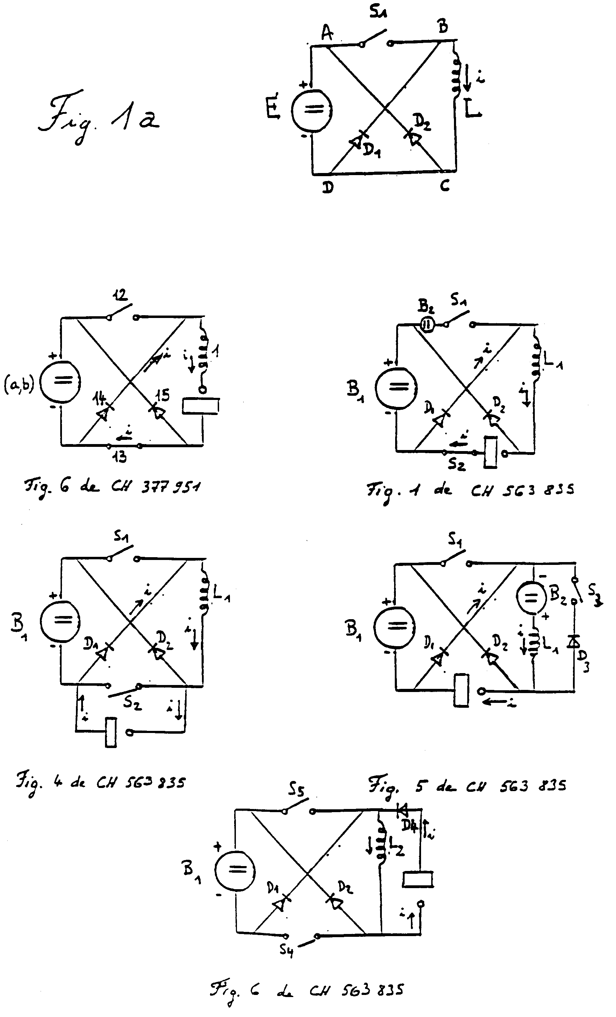

Les circuits connus , illustrés par les schémas 1a à 1d de la figure 1, comportent tous:

- une source E (appelée (a,b) dans CH 377951 et B1 dans CH 563835),
- deux dispositifs conjoncteurs-disjoncteurs S1 et S2 (appelés 12 et 13 dans CH 377951 et S1 et S2 ou S4 et S5 dans CH 563 835),
- deux diodes D1 et D2 (appelées 14 et 15 dans CH 377951 et D1 et D2 dans CH 563 835) et
- un accumulateur d'énergie L (la bobine de self-induction appelée 1 dans CH 377951 et L1 dans CH 563 835).

Le dispositif conjoncteur-disjoncteur S1 étant dans la branche AB et la bobine de self-induction L dans la branche BC, le deuxième dispositif conjoncteur-disjoncteur S2 est soit dans la branche CD ou en parallèle avec L. Les électrodes peuvent être en série avec L dans la branche BC, en série ou en parallèle avec S2 dans la branche CD, ou dans la branche CD lorsque S2 est en parallèle avec L, ou encore en parallèle avec L lorsque S2 est dans la branche CD.

Pour un premier état des deux dispositifs conjoncteurs-disjoncteurs, l'énergie emmagasinée dans L est transférée entre les électrodes (fig. 1a).

Pour un deuxième état des deux dispositifs conjoncteurs-disjoncteurs, l'énergie de l'accumulateur est envoyée dans un circuit de dérivation tandis qu'aucun courant ne passe entre les électrodes (fig. 1b).

Pour un troisième état de ces deux dispositifs conjoncteurs-disjoncteurs, le courant restitué par l'accumulateur à la source d'alimentation la traverse en sens inverse du courant qu'elle peut fournir. La zone d'usinage est branchée dans ce circuit de récupération; il s'agit bien d'un circuit "puits" (Fig. 1c).

Pour un quatrième état de ces deux dispositifs conjoncteurs-disjoncteurs, le courant restitué par l'accumulateur à la source d'alimentation la traverse code ci-dessus en sens inverse du courant qu'elle peut fournir, mais la zone d'usinage n' est pas branchée dans ce circuit de récupération (fig 1d).

Le générateur selon la présente invention schématisé à la figure 2 comporte une source intermédiaire E2 raccordée au réseau R et branchée en série avec la zone d'usinage, c'est-à-dire l'espace entre l'électrode-outil ou le fil 1 et la pièce à usiner 2, dans deux circuits de restitution de type "puits", ainsi qu'une source d'amorçage (ou d'allumage) E3 montée en parallèle avec une source de puissance E1 capable de délivrer dans la zone d'usinage des impulsions de courant de forte intensité.

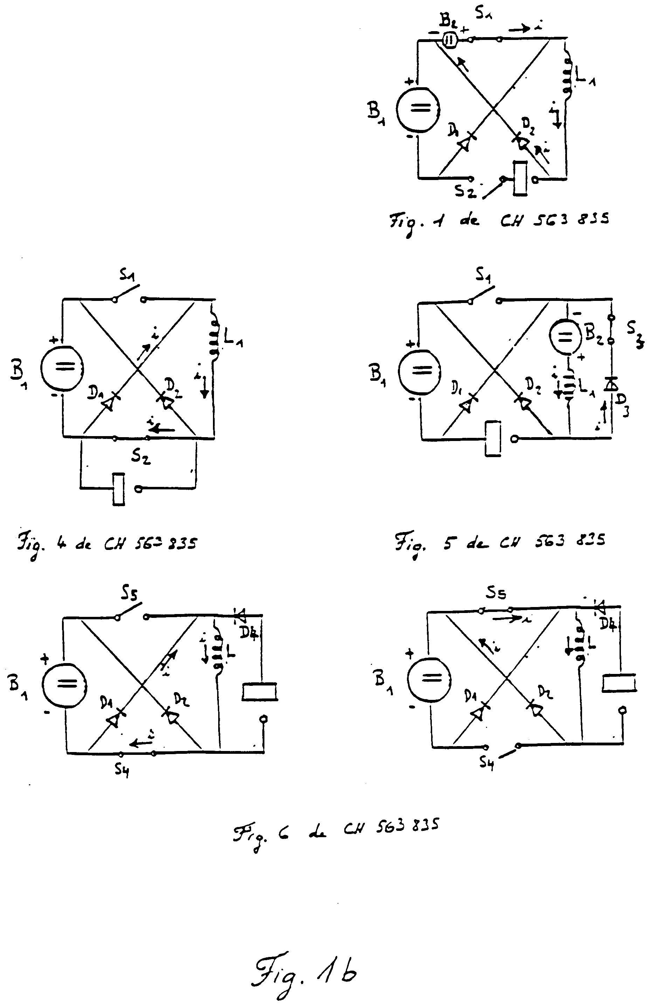

Les sources E1 et E3 ne sont pas raccordées directement au réseau mais à des circuits élévateurs de tension 50, respectivement 51 (décrits plus loin), intercalés entre chacune d'elles et la source intermédiaire E2. Elles peuvent être constituées par des capacités suffisamment importantes. Elles sont maintenues à une tension prédéterminée grâce à un stabilisateur branché entre elles et la source intermédiaire E2 comme expliqué en référence de la figure 5.

L'alimentation de la source intermédiaire E2 est réalisée à partir d'un transformateur 3 triphasé de quelques KVA; il comporte un enroulement primaire avec une tension de quelques centaines de volts, et un enroulement secondaire pouvant fournir un courant de quelques dizaines d'ampères sous une tension adéquate, après redressement en pont triphasé; il comporte un secondaire supplémentaire destiné à la source auxiliaire E4 de la source d'allumage; E4 est une source de basse tension, appropriée au circuit de limitation et dont le rôle sera expliqué plus loin.

Toutefois E1 reste la source de puissance car les circuits du générateur selon la présente invention sont agencés pour que la tension entre les bornes de E1 soit beaucoup plus importante que celle de la source intermédiaire E2 (par exemple respectivement 200V et 100V).

Comme les générateurs décrits dans CH 644 290, le générateur selon la présente invention permet grâce aux sources E1 et E3 d'amorcer à basse tension puis d'utiliser une haute tension pour faire monter le courant très rapidement et obtenir ainsi les impulsions courtes et intenses, à fronts raides, favorables par exemple au découpage à fil. Il comporte une unité de synchronisation 10 qui détecte l'amorçage, fixe le temps de pause to entre deux impulsions de tension ainsi que tr, le laps de temps minimum séparant le début de l'impulsion de tension de l'enclenchement de la source d'alimentation E1, ainsi qu'un régulateur 20 mesurant les délais d'amorçage td et réglant l'amplitude maximum de l'impulsion de courant émise par la source de puissance E1 (courant de pointe) en fonction du délai d'amorçage.

Toutefois, la source d'amorçage E3 n'est plus un circuit à relaxation mais à impulsions commandées. Elle est branchée dans un circuit similaire à celui représenté à la fig. 1 de CH 563 835, comprenant une self-induction L3, une résistance 5 et un limiteur de courant 30 capable de maintenir le courant circulant dans cette self à une intensité prédéterminée en commandant un organe conjoncteur-disjoncteur S3 branché en série avant cette self L3. Ce circuit présente encore deux diodes, D3 et D5, et une source auxiliaire E4; son fonctionnement sera expliqué plus loin.

Les sources E2 et E4 comprennent chacune une capacité, respectivement C2 et C4, montées en parallèle avec les bornes de la source correspondante. La source E1 fournit instantanément l'énergie pendant la montée de l'impulsion de courant, tandis que la capacité C2 accumule instantanément l'énergie récupérée de la ligne d'usinage pendant la descente de cette impulsion. Ces capacités sont aussi destinées à recevoir l'énergie restituée par les divers accumulateurs d'énergie du générateur.

La source intermédiaire E2 est branchée dans deux circuits "puits" qui fonctionnent de façon similaire au circuit "puits" (comprenant deux organes conjoncteurs-disjoncteurs synchronisés et deux éléments conducteurs unidirectionnels) décrit à la fig. 6 du CH 377 951; mais ils ne comportent qu'un seul organe conjoncteur-disjoncteur, le transistor S1, respectivement S2, et un seul élément conducteur unidirectionnel, la diode D1, respectivement D2.

Lors de la fermeture de l'organe conjoncteur-disjoncteur S1, respectivement S2, le courant délivré par la source E1, respectivement E3, traverse en série la self de ligne L1, respectivement L2 et l'espace entre les électrodes. Ce courant ne traverse pas la diode D1, respectivement D2, dont la polarité est inverse. Par contre, lorsque les courants d'alimentation sont interrompus par suite de l'ouverture des organes conjoncteurs-disjoncteurs S1 et S2, l'énergie accumulée dans les selfs de ligne L1 et L2 est restituée et fait circuler un courant de restitution dans les circuits comprenant L1, les électrodes, la source intermédiaire E2 et la diode D1, respectivement L2, les électrodes, la source intermédiaire E2 et la diode D2. Ces diodes D1 et D2 sont branchées de façon que ce courant de restitution doive traverser la source E2 en sens inverse du courant que celle-ci peut fournir.

Ainsi dans le cas par exemple d'une découpe réalisée en ébauche avec fil-électrode à raison de 300mm2/mn' pour une puissance de l'ordre de 3.000W extraite du réseau, le puits canalisant l'énergie accumulée dans les lignes de la source de puissance E1 restitue à la source intermédiaire E2 environ 2 000W. Ainsi, c'est environ 5.000W qui pourront être transférés à la source de puissance E1, dont plus du tiers a été récupéré. Ajoutons que 1.700W environ ont été consommés par l'usinage, donc moins que la puissance récupérée.

L'alimentation de l'espace entre les électrodes en impulsions de courant sera décrite en référence avec la fig. 3. Elle se décompose en quatre phases :

- une phase d'amorçage (de l'instant t1 à l'instant t3) dans laquelle on enclenche à l'instant t1 d'abord la source d'allumage (ou source d'amorçage) E3 en fermant l'organe conjoncteur-disjoncteur S2; une tension Ui s'établit entre les électrodes, réglable entre 80 et 200 V par exemple. Au bout d'un délai d'amorçage de durée aléatoire td, une décharge éclate (à l'instant t2) et la source d'amorçage E3 débite un courant de décharge de valeur lo imposée par E3 dans le circuit d'allumage, tandis que la tension entre les électrodes tombe à la valeur Ue. Ce courant lo est de l'ordre de 1 à 16 A par exemple. Ce circuit comprend en série l'organe conjoncteur-disjoncteur S2, la self de ligne L2 et les électrodes 2 et 1. Le courant de décharge ne traverse pas les diodes D2 et D3 dont la polarité est inverse. Cet amorçage est détecté par l'unité de synchronisation 10 qui mémorise le délai d'amorçage td, module la puissance délivrée en fonction de td et déclenche à l'instant t3 la source d'alimentation E1 en fermant l'organe conjoncteur-disjoncteur S1;
- une première phase d'usinage (de l'instant t3 à l'instant t4) pendant laquelle l'amplitude de l'impulsion de courant croit jusqu'à la valeur de pointe lp, (fonction de td), suite à l'établissement d'un courant de forte intensité dans le circuit d'alimentation de puissance. Ce dernier comprend la source E1, le transistor S1, la self de ligne L1, les électrodes 2 et 1. Ce courant ne traverse pas les diodes D1 et D4 dont la polarité est inverse. La valeur de lp peut varier par exemple de 50A à plusieurs centaines d'ampères. On maintient les deux sources E1 et E3 enclenchées pendant un temps te indépendant de la valeur de lp et imposé par l'unité 10 ; une fraction importante de la puissance délivrée par les sources E1 et E3 est emmagasinée dans les accumulateurs du circuit, en particulier les selfs de ligne L1 et L2 tandis qu'une partie plus faible est dissipée entre les électrodes.
- une deuxième phase d'usinage (de l'instant t4 à l'instant t5); à l'instant t4, on coupe les deux sources E1 et E3 en ouvrant les organes conjoncteurs-disjoncteurs S1 et S2. Dés cette ouverture, un courant de restitution se met à circuler entre les électrodes, à travers la source intermédiaire E2, en sens inverse du courant que celle-ci peut fournir, et dans les diodes D1 et D2. Comme la tension de la source E2 s'oppose à celle des selfs de ligne L1 et L2, le courant décroît brusquement de lp jusqu'à ce qu'il devienne nul (à l'instant t5) selon une pente fixée par la valeur de lp et la durée t5-t4;
- un temps de pause (de l'instant t5 à l'instant to') pendant lequel on maintient E1 et E2 hors circuit.

Comme représenté à la fig. 3, on obtient des impulsions de courant de durée te, de forte amplitude et sensiblement triangulaires, a fronts de montée et de descente raides.

Par ailleurs, ce générateur peut aussi fonctionner corne générateur de finition en n'utilisant que la source d'allumage E3 et en mettant hors circuit la source de puissance E1. On sait que des impulsions à fronts raides ne sont pas souhaitables en finition. Aussi, plutôt que de restituer à la fin de chaque impulsion de courant l'énergie stockée dans la self de ligne L2 à la source intermédiaire E2 en ouvrant l'organe conjoncteur-disjoncteur S2, ce qui fait passer le courant de restitution à travers une source en sens inverse du courant que celle-ci peut fournir et donc le fait décroître rapidement entre les électrodes, on ouvre le transistor S3 en maintenant l' organe conjoncteur-disjoncteur S2 conducteur. L'alimentation par la source E3 (et par la source auxiliaire E4) est interrompue, tandis qu'un courant restituant à l'espace entre les électrodes l'énergie emmagasinée dans la self de ligne L2 et dans la self L3 passe par l' organe conjoncteur-disjoncteur S2, puis entre ces électrodes et enfin par la diode D3, en diminuant lentement.
Ceci est illustré à la fig. 4 où

- de l'instant t2 à l'instant t4 : l' organe conjoncteur-disjoncteur S2 et le transistor S3 sont conducteurs ;
- de l'instant t4 à l'instant t1': on ouvre le transistor S3 . On obtient ainsi une impulsion trapézoidale, à montée et descente lentes du courant.

Signalons que lorsque le transistor S3 est fermé alors que S2 est ouvert, la source auxiliaire E4 débite dans la self L3, travers le transistor S3 et la résistance 5 ; le courant qui circule à travers cette self L3 augmente jusqu'à une valeur prédéterminée imposée par le limiteur de courant 30 qui commande alors l'ouverture du transistor S3.

La figure 5 schématise l'un des modes de réalisation du circuit élévateur de tension 50 qui permet de transférer de l'énergie de la source intermédiaire E2 a la source de puissance E1. Les mêmes références qu'à la fig. 2 sont utilisées pour désigner les mêmes organes. On reconnait ainsi la diode D1 et l' organe conjoncteur-disjoncteur S1.
Ce circuit 50 comprend un régulateur ou stabilisateur de tension 40 qui permet à la capacité C1 de rester chargée à une tension U1 prédéterminée (comprise entre 170 et 200V dans cet exemple), ainsi qu'un circuit élévateur de tension proprement dit, comprenant une bobine de self induction L5, des organes pour comparer le courant i5 circulant dans cette bobine L5 à deux valeurs de référence inférieure et supérieure et des moyens pur actionner un organe conjoncteur-disjoncteur suite à un signal indiquant que le courant i5 atteint l'une de ces valeurs de référence.
Dans le mode de réalisation illustré sur cette figure, le circuit élévateur de tension comprend une bobine de self induction L5, un régulateur de courant 8 à découpage avec modulation de rapport cyclique agencé pur actionner un transistor S5, une capacité C1 et une diode D4. La tension U2 aux bornes de la source intermédiaire E2 est élevée jusqu'à une tension U1 prédéterminée selon le principe suivant :

- le courant i5 circulant dans la bobine de self induction L5 est maintenu entre deux limites grâce au régulateur de courant 8 et au transistor S5. Ce régulateur 8 est agencé pour suivre les variations du courant i5 entre deux valeurs de référence i51 et i52 et pour commander l'ouverture de S5 dès que i5 atteint la limite maximum i52 et sa fermeture dès que i5 atteint la limite minimum i51.
- Lorsque le transistor S5 est fermé, l'énergie débitée par la source intermédiaire E2 s'accumule dans la self L5 en provoquant une augmentation du courant i5 oui circule dans L5, le transistor S5 et revient à la source E2.
- Au bout d'un laps de temps t1, le courant i5 atteint la valeur i52 et le régulateur 8 actionne l'ouverture du transistor S5; la diode D4 est branchée de manière que l'énergie accumulée dans L5 doive être restituée à travers cette diode à la capacité C1; le courant i5 diminue jusqu'à atteindre le minimum i51 au bout d'un laps de temps t2 où le régulateur 8 actionne la fermeture du transistor S5 et le cycle reprend comme avant.

Soit U2 la tension du condensateur C2; on voit que

$$\frac{U1 + U2}{U2} = \frac{t1 + t2}{t2} \qquad \text{ou } U1 = U2\,\frac{t1}{t2}$$

Ainsi, si U2 = 80V, et t1/t2 = 5/2 par exemple, on aura U1 = 200V.

La tension U1 "créée" comme expliqué ci-dessus par le double circuit élévateur de tension est stabilisée à une valeur prédéterminée selon le principe suivant :

- grâce aux amplificateurs différentiels 6 et 7 branchés aux bornes de la source de puissance E1, le stabilisateur 40 détecte toute variation de la différence de potentiel entre les bornes de cette source de puissance E1, suite à une impulsion de courant, par exemple, et
- commande les temps t1 et t2 d'ouverture et de fermeture du transistor S5 de manière à ramener cette différence de potentiel à la valeur U1 prédéterminée.

Un deuxième circuit 51 de même type peut être utilisé pour alimenter la source d'allumage E3 depuis E2.

La source intermédiaire E2 raccordée au réseau peut également jouer le rôle de source d'amorçage. La figure 6 schématise l'un des modes de réalisation d'un tel circuit, à la fois puits, car capable de récupérer l'énergie de la self de ligne L1, et stabilisateur et élévateur de tension, car agencé pour transférer cette énergie à la source de puissance E1 et source d'allumage. Les mêmes références qu'aux fig. 2 et 5 sont utilisées pour désigner les mêmes organes. On reconnait ainsi les électrodes 1 et 2, les diodes D1 et D4, les organes conjoncteurs-disjoncteurs S1 et S5, la self L5, le stabilisateur de tension 40 et le régulateur 8.

Grâce au switch S6, à la diode D6 et au limiteur 6, on peut connecter d'abord la source E2 aux électrodes en fermant l'organe conjoncteur-disjoncteur S6, l'organe conjoncteur-disjoncteur S1 étant ouvert; E2 délivre alors entre les électrodes un courant d'allumage i, de polarité inverse. Il se crée une self de ligne L7. Une unité de synchronisation 10' est reliée aux circuits pilote 20 et 21 de S1, respectivement S6, et actionne ces organes comme décrit en référence à la fig.2 pour S1 et S2.

La diode D6 permet à la source E1 de récupérer l'énergie emmagasinée dans le limiteur 6; cet organe 6 peut être une inductance ou une résistance de tout type connu, par exemple; la résistance ballast R1 est destinée à dissiper le surplus de cette énergie.

Selon certains modes de réalisation, l'unité de synchronisation 10' peut être comprise dans l'unité 10; la portion de circuit comprenant en série le limiteur 6 et l'organe conjoncteur-disjoncteur S6 peut être greffé entre S1 et L1, comme montré à la figure 6, mais aussi entre L1 ou L2 et l'espace interélectrodes.

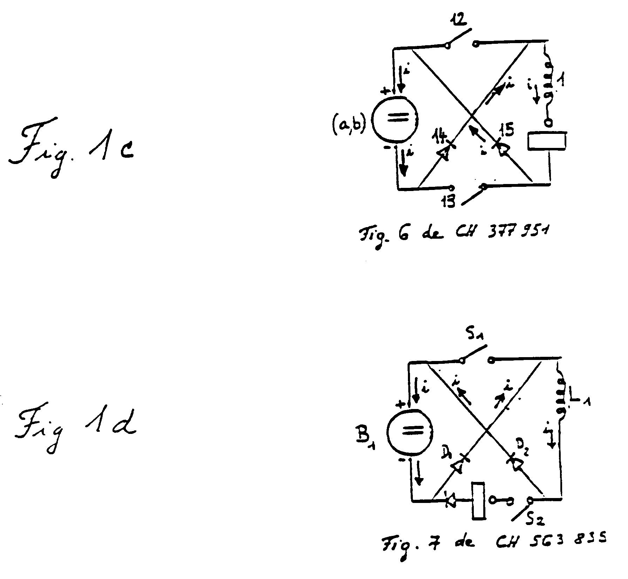

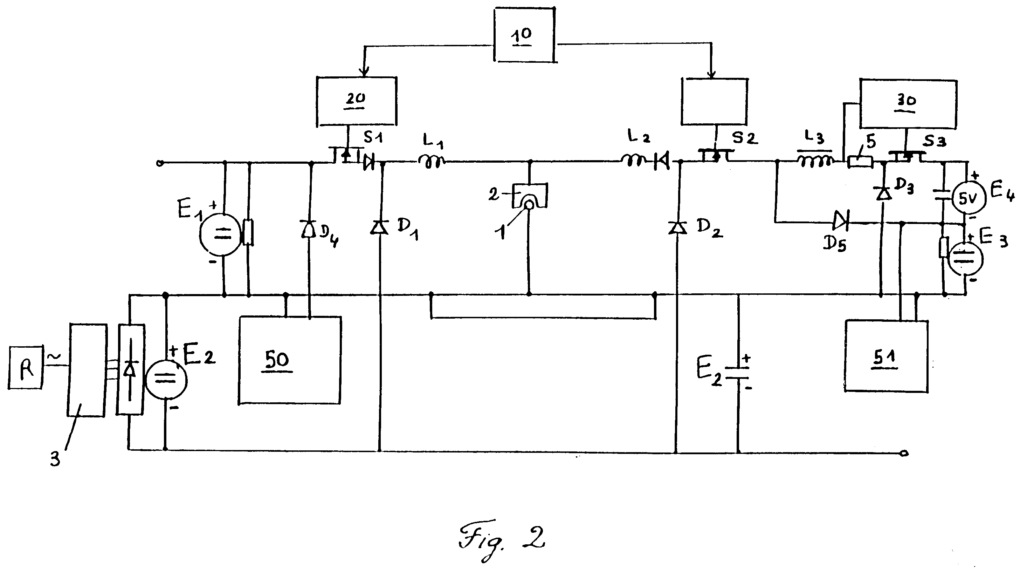

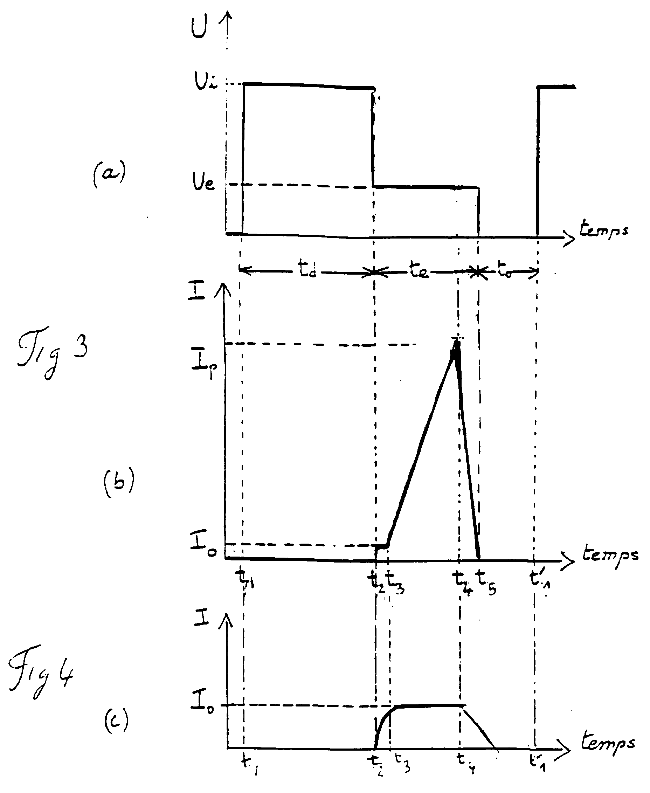

Selon une autre variante avantageuse de ce circuit ou la source intermédiaire E2 peut délivrer un courant de polarité inverse, une source d'amorçage E3 distincte est maintenue; ceci est illustré à la figure 7 ou les mêmes références qu'aux fig. 2 et 6 sont utilisées pour désigner les mêmes organes. Le fonctionnement du switch S6, de la diode D6 et du limiteur 6 sont les mêmes que ceux décrits en référence à la figure 6: comme le switch S6 est fermé alors que les organes conjoncteurs-disjoncteurs S1 et S2 sont ouverts, des impulsions de courant de polarité inverse en provenance de la source E2 circulent entre les électrodes pendant le temps de pause entre deux impulsions successives de la première polarité. On peut ainsi régler l'unité de synchronisation 10 pour que la tension moyenne d'usinage sur une période ou un ensemble de périodes soit nulle. Selon une variante, le switch S6 peut être remplacé par un régulateur linéaire qui polarise l'espace interélectrodes en permanence ou en durée determinée pendant le temps de pause, l'unité de synchronisation 10 réglant alors l'amplitude de la tension inverse sur une période ou un ensemble de périodes.

Ce mode d'exécution de la présente invention est particulièrement avantageux. En effet, cette source bipolaire E2 permet d'éviter la dissolution anodique des pièces sensibles, tel que les carbures à liant cobalt. De plus cet allumage par un courant positif semble stabiliser l'usinage en ébauche avec fil laiton et diminuer les dépots d'ébauche.

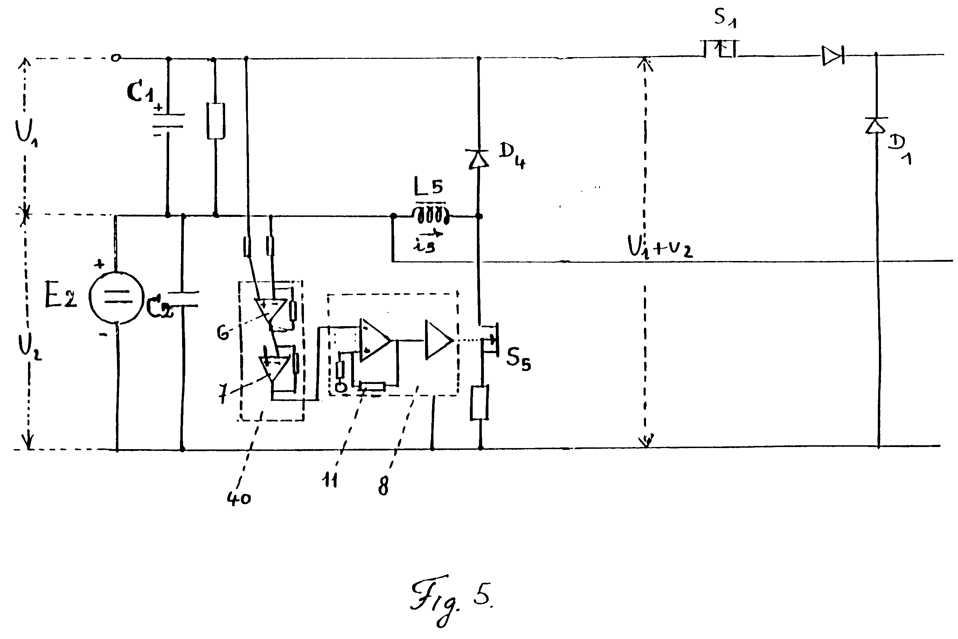

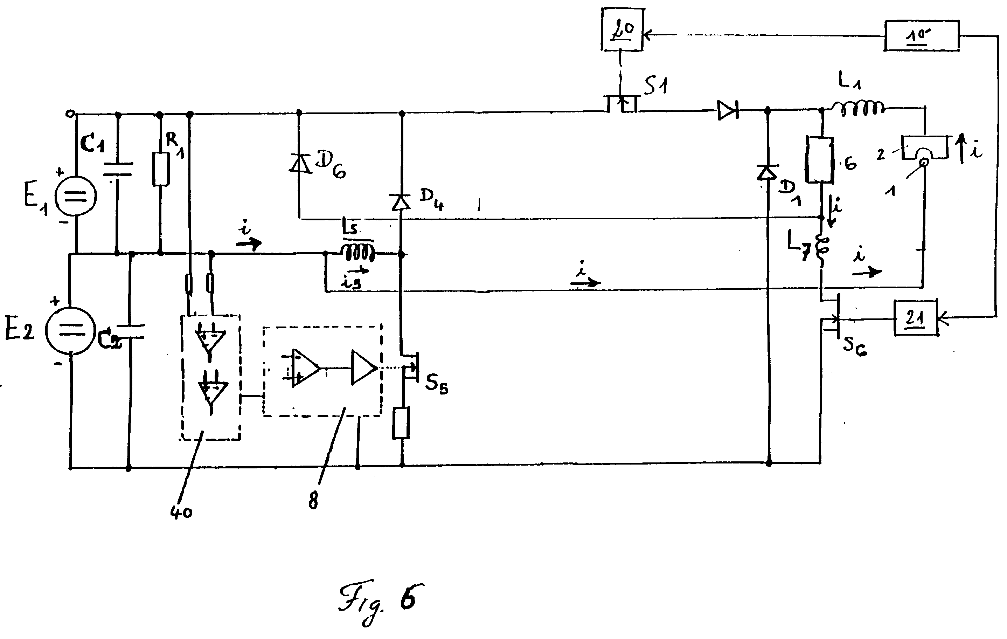

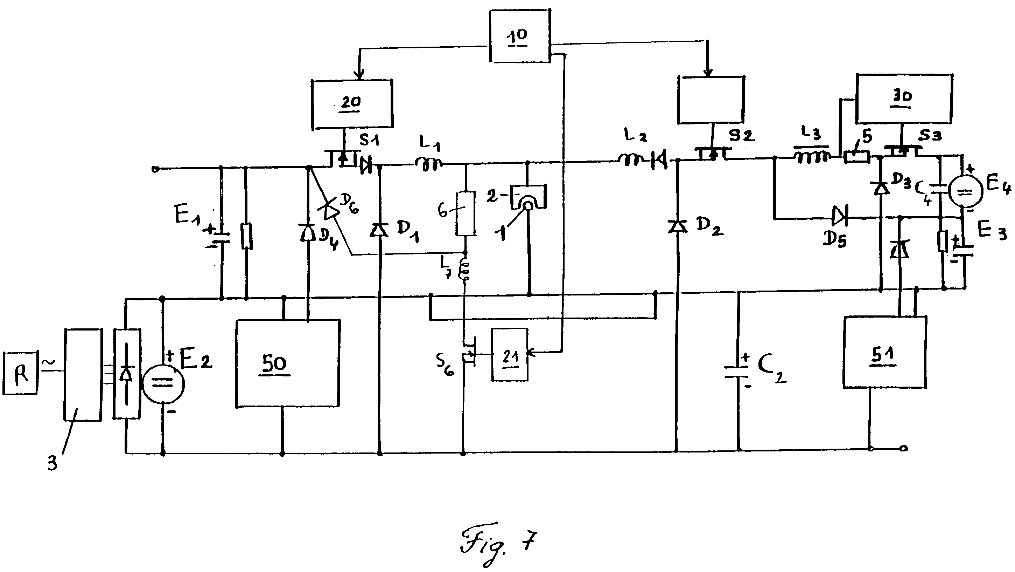

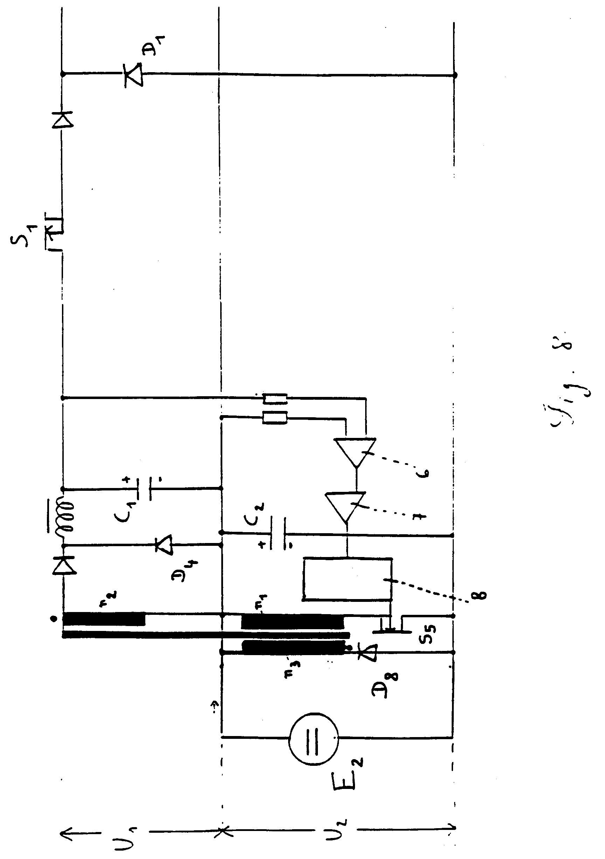

Selon d'autres modes d'exécution avantageux de la présente invention, la self L5 peut être remplacée par un transformateur, comme illustré aux figures 8 et 9. En effet, le circuit élévateur de tension peut être du type convertisseur direct isolé comme illustré à la figure 8. Les mêmes références qu'à la fig. 5 sont utilisées pour désigner les mêmes organes. On reconnait ainsi les amplificateurs différentiels 6 et 7 du régulateur ou stabilisateur de tension qui permet à la capacité C1 de rester chargée à une tension U1 prédéterminée ainsi que le régulateur de courant 8 à découpage avec modulation de rapport cyclique actionnant le transistor S5, la capacité C1 et la diode D4.

Le transistor S5 est monté en série avec l'enroulement n1 d'un transformateur dont l'enroulement de démagnétisation n3, en série avec une diode D8, est branché aux bornes de la source E2, en parallèle avec n1 et S5. Un troisième enroulement n2 est branché aux bornes de la capacité C1.

Soit toujours U1 et U2 les tensions aux bornes de C1, respectivement E2, la source intermédiaire; on voit que

$$\frac{U1}{U2} = \frac{n2}{n1} \cdot s$$

s étant le rapport cyclique de S5.

Ce circuit élévateur de tension peut aussi être du type à accumulateur isolé avec démagnétisation incomplète, comme illustré à la figure 9.

Les mêmes références qu'à la fig. 8 sont utilisées pour désigner les mêmes organes. On reconnait ainsi les amplificateurs différentiels 6 et 7 du régulateur ou stabilisateur de tension qui permet à la capacité C1 de rester chargée à une tension U1 prédéterminée ainsi que le régulateur de courant 8 à découpage avec modulation de rapport cyclique actionnant le transistor S5, la capacité C1 et la diode D4.

Comme à la figure 8, le transistor S5 est monté en série avec l'enroulement n1 d'un transformateur et est branché aux bornes de la source E2. Toutefois ce dernier ne présente pas d' enroulement de démagnétisation. Un deuxième enroulement n2 est branché aux bornes de la capacité C1.

Soit toujours U1 et U2 les tensions aux bornes de C1, respectivement E2, la source intermédiaire; on voit que

$$\frac{U1}{U2} = \frac{n2}{n1} \cdot \frac{s}{1 - s}$$

s étant le rapport cyclique de S5.

Ces variantes sont particulièrement avantageuses : elles permettent de fabriquer "gratuitement" la source auxiliaire E4 (voir figure 2); en rendant inutiles les résistances "ballast" (voir par exemple la résistance R1 aux figures 2 et 5), elles permettent d'économiser l'énergie qui y serait dissipée.

Comme illustré également à la figure 9, selon certains modes d'exécution de la présente invention, un transformateur dont les deux enroulements sont référencés n4 et n5, peut être branché en parallèle avec l'espace interélectrodes et la source de puissance E1 et, le cas échéant, avec la source d'amorçage E3.

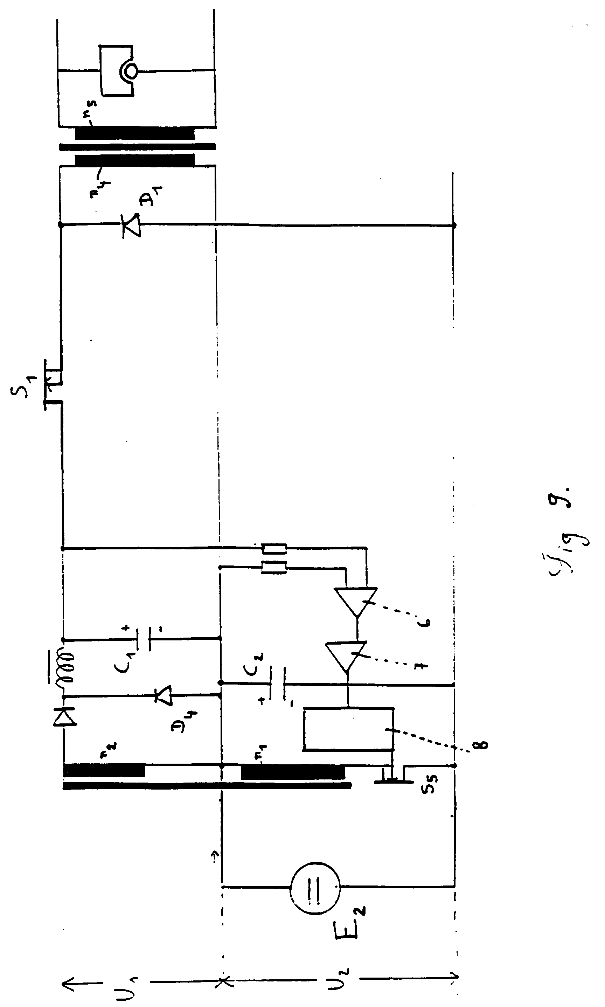

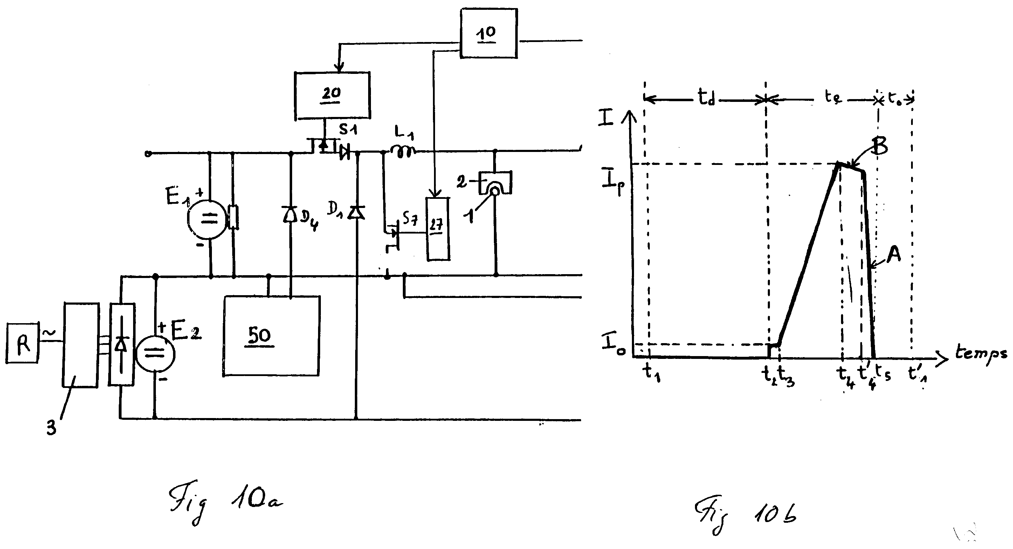

Selon une dernière variante schématisée à la figure 10 a, un organe conjoncteur-disjoncteur S7 est branché en parallèle avec l'espace interélectrodes et la source de puissance E1. Il est actionné par un régulateur 27 qui peut être relié à l'unité de synchronisation 10. Ce dispositif permet d'obtenir des impulsions de courant avec deux pentes successives de descente de courant, comme représenté à la figure 10 b : la portion A correspond au cas ou les organes conjoncteurs-disjoncteurs S1 et S7 sont ouverts, tandis que la portion B correspond au cas ou l' organe conjoncteur-disjoncteur S1 est ouvert et S7 fermé.

Dans toutes ces variantes, la polarité des sources E2 et E1 peut être inversée. Si la polarité d'autres organes n'est pas inversée aussi, la source E2 transfère alors de l'énergie à la source E1 en abaissant le niveau d'énergie.

Les avantages présentés par les générateurs de la présente invention sont nombreux : ils permettent de récupérer l'énergie dissipée dans la self de ligne et d'abaisser ainsi la puissance nncessaire à des performances données. Grâce à leur agencement très rationnel, ils peuvent ne comporter que deux sources dont seule l'une doit être stabilisée. On obtient ainsi un générateur beaucoup plus simple, plus performant et moins cher que les générateurs connus.

**Revendications**

1. Générateur pour usinage par décharges électriques intermittentes dans lequel une source de courant (E1) est agencée pour alimenter la zone d'usinage entre les électrodes avec des impulsions contrôlées de courant, à fronts raides, et dans lequel l'énergie accumulée par inductivité dans la ligne d'usinage est restituée dans la zone d'usinage pendant les intervalles de temps séparant deux impulsions successives émises par la source de puissance (E1), caractérisé par une source intermédiaire (E2) branchée en série avec l'électrode-outil (1) et la pièce à usiner (2) dans un circuit agencé pour que le courant de restitution fourni par l'énergie accumulée par inductivité dans la ligne d'usinage, dite "self de ligne" (L2), traverse cette source intermédiaire (E2) en sens inverse du courant que celle-ci peut fournir et par des moyens pour renvoyer cette énergie depuis cette source intermédiaire (E2) jusqu'à la source de puissance (E1).

2. Générateur selon la revendication 1, dans lequel les moyens pour renvoyer l'énergie accumulée dans la self de ligne (L2) depuis la source intermédiaire (E2) jusqu'à la source (E1) de puissance comportent un circuit modificateur de tension avec stabilisateur (40) de tension intercalé entre ces deux sources, agencé pour opérer cette restitution sous forme de différence de potentiel stabilisée.

3. Générateur selon la revendication 1, comportant aussi une source d'allumage (E3) et une unité de synchronisation (10') agencées pour amorcer des décharges et n'enclencher la source de puissance (E1) qu'après avoir détecté l'amorçage d'une décharge.

4. Générateur selon la revendication 3, dans lequel cette source d'allumage (E3) comporte une source auxiliaire (E4)

5. Générateur selon les revendications 1 et 3, dans lequel seule la source intermédiaire (E2) est raccordée au réseau d'alimentation, la source de puissance (E1) et la source d'allumage (E3) n'étant alimentées que par cette source intermédiaires (E2).

6. Générateur selon la revendication 2, agencé pour ne nécessiter qu'un seul régulateur stabilisateur (40) de différence de potentiel.

7. Générateur selon les revendications 1 et 3, dans lequel la source intermédiaire (E2) est confondue avec la source d'allumage (E3).

8. Générateur selon la revendication 7, dans lequel la source intermédiaire (E2) est agencée pour être branchée avec les électrodes (1) selon deux polarités différentes.

## Claims

1. Generator for machining by intermittent electric discharges, in which a current source (E1) is arranged to supply the machining zone between the electrodes with steep, controlled current impulses, and in which the energy accumulated by inductivity in the machining line is restored in the machining zone during the time intervals separating two successive impulses emitted by the power source (E1), characterised by an intermediate source (E2) connected in series with the electrode-tool (1) and the workpiece (2) in a circuit arranged so that the restoring current provided by the energy accumulated by inductivity in the machining line, the so-called "self-inductance" (L2), passes through this intermediate source (E2) in the oppposite direction of the current that the latter can provide and through means for returning this energy from this intermediate source (E2) to the power source (E1).

2. Generator according to claim 1, in which the means for returning the energy accumulated in the self-inductance (L2) from the intermediate source (E2) to the power source (E1) comprise a voltage-modifying circuit with voltage stabilizer (40) interposed between these two sources, arranged to operate this restoration in the form of a stabilised potential difference.

3. Generator according to claim 1, also comprising an arcing source (E3) and a synchronisation unit (10') arranged to trigger discharges and only to engage the power source (E1) after having detected the triggering of a discharge.

4. Generator according to claim 3, in which this arcing source (E3) comprises an auxiliary source (E4).

5. Generator according to claims 1 and 3, in which only the intermediate source (E2) is connected to the supply system, with the power source (E1) and the arcing source (E3) only being supplied by this intermediate source (E2).

6. Generator according to claim 2, arranged so as to require only one single potential difference stabilising regulator (40).

7. Generator according to claims 1 and 3, in which the intermediate source (E2) is merged with the arcing source (E3).

8. Generator according to claim 7, in which the intermediate source (E2) is arranged to be connected to the electrodes (1) in accordance with two different polarities.

## Patentansprüche

1. Impulsgenerator für die Bearbeitung durch intermittierende elektrische Entladungen, bei dem eine Stromquelle (E1) zum Versorgen des Bearbeitungsbereichs zwischen den Elektroden mit gesteuerten Stromimpulsen mit steilen Anstiegsflanken angeordnet ist, und bei dem die durch Induktivität in dem Bearbeitungsschaltkreis akkumulierte Energie in dem Bearbeitungsbereich während der zwei aufeinanderfolgenden, von der Stromquelle (E1) abgegebene Impulse trennenden Zeitintervalle restituiert wird, gekennzeichnet durch eine intermediäre Quelle (E2), die in Reihe mit der Werkzeugelektrode (1) und dem zu bearbeitenden Werkstück (2) in einen Schaltkreis geschaltet ist, der ausgebildet ist, damit der Restitutionsstrom, geliefert durch die Induktivität in der Bearbeitungsstrecke, genannt "Selbstinduktion des Schaltkreises" (L2), akkumulierten Energie, durch diese intermediäre Quelle (E2) im umgekehrten Sinne des Stroms fließt, den diese liefern kann, und durch Mittel zum Zurückführen dieser Energie von dieser intermediären Quelle (E2) an die Stromquelle (E1).

2. Impulsgenerator nach Anspruch 1, bei dem die Mittel zum Zurückführen der in der Selbstinduktion des Schaltkreises (L2) akkumulierten Energie von der intermediären Quelle (E2) zur Stromquelle (E1) einen Schaltkreis zur Spannungsmodifikation mit Spannungsstabilisierung (40), zwischen den beiden Quellen zwischengeschaltet, umfassen, der ausgebildet ist, um diese Restitution in Form einer stabilisierten Potentialdifferenz durchzuführen.

3. Impulsgenerator nach Anspruch 1, umfassend auch eine Zündstromquelle (E3) und eine Synchronisationseinheit (10'), ausgebildet zum Auslösen von Entladungen und nur Zuschalten der Stromquelle (E1), nachdem das Einsetzen einer Entladung festgestellt wurde.

4. Impulsgenerator nach Anspruch 3, bei dem diese Zündstromquelle (E3) eine Hilfsquelle (E4) umfaßt.

5. Impulsgenerator nach den Ansprüchen 1 und 3, bei dem lediglich die intermediäre Quelle (E2) an das Versorgungsnetz angeschlossen ist, während die Stromquelle (E1) und die Zündstromquelle (E3) nur durch diese intermediäre Quelle (E2) versorgt sind.

6. Impulsgenerator nach Anspruch 2, ausgebildet, um nur einen einzigen Regler (40) für die Stabilisierung der Potentialdifferenz zu benötigen.

7. Impulsgenerator nach den Ansprüche 1 und 3, bei dem die intermediäre Quelle (E2) mit der Zündstromquelle (E3) vereinigt ist.

8. Impulsgenerator nach Anspruch 7, bei dem die intermediäre Quelle (E2) ausgebildet ist, um mit den Elektroden (1) gemäß zwei verschiedenen Polaritäten verbunden zu werden.

Fig. 1a

Tig. 6 de CH 377 951

Tig. 1 de CH 563 835

Tig. 4 de CH 563 835

Tig. 5 de CH 563 835

Tig. 6 de CH 563 835

Fig. 1 de CH 563 835

Fig. 4 de CH 563 835

Fig. 5 de CH 563 835

Fig. 6 de CH 563 835

Fig. 1b

Fig. 1c

Fig. 6 de CH 377 951

Fig 1d

Fig. 7 de CH 563 835

Fig. 2

Fig 3

Fig 4

EP 0 572 717 B1

$\mathcal{F}_{ig}$. 5.

Fig. 6

Fig. 7

EP 0 572 717 B1

Fig. 8

EP 0 572 717 B1

Fig 9.

Fig 10a

Fig 10b